# EUROPÄISCHE PATENTSCHRIFT

(11) **EP 2 521 210 B1**
(45) Veröffentlichungstag und Bekanntmachung des Hinweises auf die Patenterteilung: **02.11.2016**
(21) Anmeldenummer: 12163466.1
(22) Anmeldetag: 05.04.2012
(51) Int. Cl.: H01M 8/06

(54) **Verfahren zum Betreiben einer Reformer-Brennstoffzellenanlage**
Method for operating a reformer fuel cell assembly
Procédé d'opération d'une installation de pile à combustible - réformateur

(30) Priorität: 05.05.2011 DE 102011100534
(43) Veröffentlichungstag der Anmeldung: 07.11.2012
(73) Patentinhaber: ThyssenKrupp Marine Systems GmbH, 24143 Kiel (DE)
(72) Erfinder: Pommer, Hans, 24360 Barkelsby (DE); Dannenberg, Norbert, 23628 Krummesse (DE)
(74) Vertreter: ThyssenKrupp Intellectual Property GmbH

(56) Entgegenhaltungen:
- GB-A- 2 242 563
- JP-A- 2004 018 280
- JP-A- 2005 154 220
- US-A1- 2008 038 598

## Beschreibung

Die Erfindung betrifft ein Verfahren zum Betreiben einer Reformer- Brennstoffzellenanlage, eine Reformer-Brennstoffzellenanlage und ein Unterseeboot mit einer Reformer-Brennstoffzellenanlage.

Es ist bekannt, Brennstoffzellen zur Stromversorgung von Stromnetzen, insbesondere von Bordstromnetzen von Unterseebooten, einzusetzen. Mitunter sind solche Brennstoffzellen Teil von Reformer-Brennstoffzellenanlagen, bei welchen ein Reformer Brennstoff für die Brennstoffzelle bereitstellt.

Reformer-Brennstoffzellenanlagen sind in ihrer Reaktionszeit jedoch regelmäßig durch die träge Dynamik, d.h. die lange Reaktionszeit, des Reformers begrenzt. Auf dynamische Leistungsanforderungen von Verbrauchern des Stromnetzes reagieren Reformer-Brennstoffzellenanlagen folglich häufig zu langsam oder nicht genügend stabil. Dies erschwert den Einsatz von Reformer-Brennstoffzellenanlagen insbesondere in Unterseebooten, bei welchen eine Brennstoffzellenanlage oft dynamischen Leistungsanforderungen unterliegt.

Die US 2008/0038598 A1 beschreibt ein Verfahren zum Betreiben einer Reformer-Brennstoffzellenanlage, bei welcher das aus dem Reformer austretende Reformat einem ersten Gasabscheider zugeführt wird, wobei der in diesem Gasabscheider abgetrennte gasförmige Brennstoff einem Speicher und nachfolgend der Brennstoffzelle zugeführt wird. Das im Gasabscheider verbleibende Reformat wird einem zweiten Gasabscheider zugeführt, wobei der in diesem Gasabscheider abgetrennte gasförmige Brennstoff wiederum der Brennstoffzelle zugeführt wird.

Es ist daher Aufgabe der Erfindung, ein Verfahren zum Betreiben einer Reformer-Brennstoffzellenanlage bereitzustellen, mit welchem dynamische Leistungsanforderungen an eine Reformer-Brennstoffzellenanlage, insbesondere an eine Reformer-Brennstoffzellenanlage eines Unterseebootes, besser befriedigt werden können. Ferner ist es Aufgabe der Erfindung, eine Reformer-Brennstoffzellenanlage sowie ein Unterseeboot mit einer Reformer-Brennstoffzellenanlage zu schaffen, mit welchen das Verfahren ausgeführt werden kann.

Diese Aufgabe wird mit einem Verfahren zum Betreiben einer Reformer-Brennstoffzellenanlage mit den in Anspruch 1 angegebenen Merkmalen, sowie mit einer Reformer-Brennstoffzellenanlage mit den in Anspruch 11 angegebenen Merkmalen und einem Unterseeboot mit den in Anspruch 15 angegebenen Merkmalen gelöst. Bevorzugte Weiterbildungen der Erfindung sind in den Unteransprüchen, der nachfolgenden Beschreibung und der Zeichnung angegeben.

Das erfindungsgemäße Verfahren dient zum Betreiben einer Reformer-Brennstoffzellenanlage mit einem Reformer und einer Brennstoffzelle. Es versteht sich, dass unter Brennstoffzelle im Sinne der vorliegenden Erfindung eine Brennstoffzellenanlage mit einer Vielzahl von in Reihe und/oder parallel geschalteten Brennstoffzellen zu verstehen ist, wie sie beispielsweise auf Unterseebooten eingesetzt werden. Bei dem Verfahren wird aus dem Reformat des Reformers derart gasförmiger Brennstoff abgetrennt und der Brennstoffzelle zugeführt, dass das Reformat, zumindest teilweise, sowohl einem ersten und einem zweiten Gasabscheider zugeführt wird. Mittels des ersten Gasabscheiders abgetrennter Brennstoff wird in einem ersten Bedarfsfalle zunächst einem Speicher zugeführt, bevor er der Brennstoffzelle zugeführt wird. In sonstigen Fällen unterbleibt diese Zufuhr von Brennstoff zum Speicher oder aber diese Zufuhr ist zumindest verringert. Der mittels des zweiten Gasabscheiders abgetrennte Brennstoff wird bei dem Verfahren zur ständigen Speisung der Brennstoffzelle eingesetzt.

Bei dem erfindungsgemäßen Verfahren wird mittels des ersten und des zweiten Gasabscheiders aus dem Reformat des Reformers Brennstoff zum Betrieb der Brennstoffzelle abgetrennt, d.h. der erste und der zweite Gasabscheider filtern den Brennstoff für eine nachfolgende Speisung der Brennstoffzelle aus dem Reformat heraus.

Der erste Bedarfsfall tritt dabei insbesondere dann auf, wenn mittels des ersten und des zweiten Gasabscheiders mehr Brennstoff abgetrennt wird, als aktuell zur Versorgung der Brennstoffzelle benötigt wird. Ein solcher erster Bedarfsfall tritt etwa bei negativen Laständerungen (dies sind Laständerungen hin zu geringerer Last) der Brennstoffzelle oder aber beim Start des Reformers, bei welchem die Brennstoffzelle noch nicht betrieben wird, auf. Dann wird bei dem Verfahren der mittels des ersten Gasabscheiders abgetrennte Brennstoff zur Befüllung des Speichers genutzt. Der Brennstoff muss also nicht, etwa reformerintern, verbrannt werden, sondern steht nachfolgend insbesondere für positive Laständerungen der Brennstoffzelle, also für Laständerungen hin zu größerer Last, zur Verfügung.

Auf diese Weise kann die Reformer-Brennstoffzellenanlage auch bei großen und/oder sehr schnellen Laständerungen der Brennstoffzelle zuverlässig betrieben werden, denn eine zeitliche Änderung der Versorgung der Brennstoffzelle mit Brennstoff ist erfindungsgemäß nicht durch die zeitliche Dynamik des Reformers begrenzt. Vielmehr ermöglicht die zeitlich sehr rasch durchführbare Speisung des Speichers mit Brennstoff oder Zufuhr von Brennstoff aus dem Speicher zur Brennstoffzelle eine sehr schnelle Anpassung der Versorgung der Brennstoffzelle an ihren Lastzustand. Ferner muss überschüssiger Wasserstoff, der zur Versorgung der Brennstoffzelle nicht benötigt wird, nicht innerhalb des Reformers verbrannt oder gekühlt werden. Insofern lässt sich mit dem erfindungsgemäßen Verfahren eine Reformer-Brennstoffzellenanlage thermisch unkritisch betreiben.

Bevorzugt wird bei dem Verfahren Wasserstoff als Brennstoff genutzt und/oder der Reformer mit einem Treibstoff aus Kohlenwasserstoff, insbesondere Methanol und Wasser betrieben.

In einer bevorzugten Weiterbildung des erfindungsgemäßen Verfahrens werden als Gasabscheider Membranfilter eingesetzt und/oder als Speicher ein Druckspeicher eingesetzt. Insbesondere wird als Brennstoff ein Gas genutzt und als Speicher ein Gasdruckspeicher eingesetzt, wobei die Zuführung des Brennstoffs vom ersten Gasabscheider zum Speicher zudem druckgeregelt oder -gesteuert ist, insbesondere abhängig vom Druck der Brennstoffseite des ersten Gasabscheiders. In dieser Weiterbildung der Erfindung kann der Brennstoffdruck auf der Brennstoffseite des ersten Gasabscheiders dazu genutzt werden, den Brennstoff in den Druckspeicher zu treiben.

Vorzugsweise wird bei dem Verfahren dem Speicher zugeführter Brennstoff in einem zweiten Bedarfsfall der Brennstoffzelle zugeführt. In einem solchen zweiten Bedarfsfall kann, wenn die Brennstoffzelle einen erhöhten Bedarf an Brennstoff hat, schnell Brennstoff zugeführt werden. Eine Begrenzung der Brennstoffzufuhr zur Brennstoffzelle durch die Dynamik des Reformers besteht dann erfindungsgemäß nicht.

Bevorzugt zeichnet sich der erste Bedarfsfall durch eine Belastung oder Belastungsänderung der Brennstoffzelle kleiner/gleich einem ersten Schwellwert aus. In einem solchen ersten Bedarfsfall ist der Bedarf der Brennstoffzelle an Brennstoff herabgesetzt. Dann lässt sich erfindungsgemäß eine Überversorgung der Brennstoffzelle mit Brennstoff wirksam vermeiden, indem der aktuell überschüssige vom Reformer produzierte Brennstoff dem Speicher und nicht der Brennstoffzelle zugeführt wird. Alternativ oder zusätzlich zeichnet sich der erste Bedarfsfall durch eine Füllung des Speichers kleiner/gleich einem ersten Befüllungsgrad aus. Der Speicher wird dann mit dem von dem ersten Gasabscheider zugeführten Brennstoff aufgefüllt. So wird sichergestellt, dass der Speicher genügend Brennstoff gespeichert hält, um etwa künftige positive Laständerungen der Brennstoffzelle kompensieren zu können. Zweckmäßig entspricht der erste Befüllungsgrad einer Füllung des Speichers mit seiner halben Speicherkapazität oder mit einer geringeren Füllung des Speichers.

Der zweite Bedarfsfall zeichnet sich vorzugsweise durch eine Belastung oder Belastungsänderung der Brennstoffzelle größer/gleich einem zweiten Schwellwert, welcher insbesondere größer/gleich dem ersten Schwellwert ist, aus. In diesem zweiten Bedarfsfall kann der Bedarf der Brennstoffzelle durch die Brennstoffproduktion des Reformers nicht befriedigt werden. Erfindungsgemäß wird eine Unterversorgung der Brennstoffzelle mit Brennstoff vermieden, indem der aktuell zusätzlich zum Betrieb der Brennstoffzelle benötigte Brennstoff vom Speicher zur Brennstoffzelle geführt wird. Alternativ oder zusätzlich zeichnet sich der zweite Bedarfsfall durch eine Füllung des Speichers größer/gleich einem zweiten Befüllungsgrad aus. Der Speicher wird dann entleert, indem Brennstoff vom Speicher zur Brennstoffzelle zugeführt wird. So wird sichergestellt, dass der Speicher genügend freie Speicherkapazität aufweist, um eventuell nachfolgende negative Laständerungen der Brennstoffzelle kompensieren zu können. Zweckmäßig entspricht der zweite Befüllungsgrad einer Füllung des Speichers mit seiner halben Speicherkapazität oder einer größeren Füllung des Speichers.

Zweckmäßig wird bei dem erfindungsgemäßen Verfahren das Reformat des Reformers dem ersten Gasabscheider zugeführt und dessen reformatseitiger Rückstand dem zweiten Gasabscheider zugeführt. Auf diese Weise ist der Partialdruck des Brennstoffs im dem ersten Gasabscheider zugeführten Reformat höher als der Partialdruck des Brennstoffs im dem zweiten Gasabscheider zugeführten Rückstand. Vorteilhaft ist dadurch auch der Partialdruck des Brennstoffs auf der Brennstoffseite des ersten Gasabscheiders erhöht. Dieser erhöhte Partialdruck wird bei dem erfindungsgemäßen Verfahren geeigneterweise dazu genutzt, den Brennstoff von dem ersten Gasabscheider in den Speicher zu treiben.

Vorteilhaft wird bei dem Verfahren dann, wenn kein erster, und insbesondere auch kein zweiter Bedarfsfall vorliegen, mittels des ersten Gasabscheiders abgetrennter Brennstoff mit mittels des zweiten Gasabscheiders abgetrenntem Brennstoff vor der Zuführung zur Brennstoffzelle zusammengeführt. Besonders bevorzugt wird zugleich das Reformat des Reformers dem ersten Gasabscheider zugeführt und dessen reformatseitiger Rückstand dem zweiten Gasabscheider zugeführt. In dieser Weiterbildung der Erfindung wirken erster und zweiter Gasabscheider wie ein einziger, vergrößerter Gasabscheider zusammen. Die Abtrennung von Brennstoff aus dem Reformat erfolgt dann besonders effizient. Insbesondere bei der Verwendung von Membranfiltern als Gasabscheider hängt der Wirkungsgrad von der effektiven Fläche der Filtermembran ab. In dieser Weiterbildung der Erfindung entspricht die effektive Fläche der Filtermembran des vergrößerten Gasabscheiders der Summe der Flächen der Filtermembran des ersten Membranfilters und der Filtermembran des zweiten Membranfilters. In dieser Weiterbildung der Erfindung lässt sich das Verfahren mit einer besonders kostengünstigen Reformer-Brennstoffzellenanlage zur Durchführung des Verfahrens wie sie nachstehend beschrieben wird, durchführen, da ein zweite Gasabscheider mit geringer Größe genutzt werden kann, wenn erster und zweiter Gasabscheider zusammenwirkend zur Speisung der Brennstoffzelle genutzt werden.

In einer bevorzugten Weiterbildung des Verfahrens wird die Zufuhr des Brennstoffs zum Speicher und/oder die Zufuhr des dem Speicher zugeführten Brennstoffs zur Brennstoffzelle abhängig von Drücken in Bereichen der Reformer-Brennstoffzellenanlage gesteuert und/oder geregelt. Eine aufwendige elektronische Steuerung/Regelung ist in dieser Weiterbildung vorteilhaft verzichtbar.

Vorzugsweise wird bei dem Verfahren eine Rückführung des dem Speicher zugeführten Brennstoffs zum ersten Gasabscheider verhindert oder begrenzt. Insbesondere bei der Verwendung von Membranfiltern als Gasabscheider wird so eine unerwünschte Diffusion von Brennstoff auf die Reformatseite des ersten Gasabscheiders verhindert. Geeigneterweise wird hierzu eine Durchflussstelleinrichtung verwendet, insbesondere ein Rückschlagventil, ein Magnetventil, ein Stellventil oder ein Massenstromreg ler.

Vorteilhaft ist die Anwendung des erfindungsgemäßen Verfahrens auf einem Unterboot. Ein Unterseeboot mit einer Reformer-Brennstoffzellenanlage lässt sich mit dem zuvor beschriebenen Verfahren auch bei großen Laständerungen der Brennstoffzelle zuverlässig mit Energie versorgen.

Die erfindungsgemäße Reformer-Brennstoffzellenanlage weist einen Reformer und eine Brennstoffzelle auf. Die Reformer-Brennstoffzellenanlage ist zum Betrieb mit einem Verfahren wie vorstehend beschrieben ausgebildet und umfasst zumindest einen ersten und einen zweiten Gasabscheider, welche jeweils zur Abtrennung gasförmigen Brennstoffs aus dem Reformat ausgebildet und reformatseitig mit dem Reformer leitungsverbunden sind. Die Reformer-Brennstoffzellenanlage umfasst ferner einen zur Speicherung abgetrennten Brennstoffs ausgebildeten Speicher. Dabei ist eine brennstoffseitige Anbindung des ersten Gasabscheiders an den Speicher, eine Anbindung des Speichers an die Brennstoffseite der Brennstoffzelle und eine brennstoffseitige Anbindung des zweiten Gasabscheiders an die Brennstoffzelle vorgesehen.

Der erste und der zweite Gasabscheider sind dabei jeweils reformatführend an den Reformer angebunden, vorzugsweise mittels Leitungen, die zur Reformatführung ausgebildet sind. Unter der Anbindung des ersten Gasabscheiders an den Speicher, der Anbindung des Speichers an die Brennstoffzelle und der Anbindung des zweiten Gasabscheiders an die Brennstoffzelle ist jeweils eine brennstoffführende Anbindung zu verstehen, insbesondere mittels Leitungen, die zur Brennstoffführung ausgebildet sind.

Vorteilhaft weist die Reformer-Brennstoffzellenanlage, insbesondere mittels Druck steuer- oder regelbare, Schaltmittel auf. Die Schaltmittel sind zur fallweisen Unterbrechung oder Durchflussverringerung der Anbindung des ersten Gasabscheiders an den Speicher, der Anbindung des zweiten Gasabscheiders an die Brennstoffzelle und/oder des Speichers an die Brennstoffzelle ausgebildet. Zweckmäßig bilden steuerbare Ventile, insbesondere Magnetventile, Stellventile oder Massenstromregler solche Schaltmittel.

Bei der Reformer-Brennstoffzellenanlage besteht bevorzugt eine brennstoffseitige Verbindung des ersten und des zweiten Gasabscheiders. Insbesondere sind Schaltmittel zur Unterbrechung oder Durchflussverringerung dieser Verbindung des ersten und zweiten Gasabscheiders vorgesehen. Hierzu ist zweckmäßig ein Ausgleichsventil vorgesehen, insbesondere ein Magnetventil oder ein Durchflussregler.

Bevorzugt ist bei der Reformer-Brennstoffzellenanlage die Reformatseite des zweiten Gasabscheiders mit der Reformatseite des ersten Gasabscheiders leitungsverbunden. Der erste und der zweite Gasabscheider können dann fallweise zu einem einzigen, vergrößerten Gasabscheider zusammenwirken, wie vorstehend zum erfindungsgemäßen Verfahren beschrieben.

Das erfindungsgemäße Unterseeboot weist eine Reformer-Brennstoffzellenanlage wie vorstehend beschrieben auf.

Nachfolgend wird die Erfindung anhand eines in der Zeichnung dargestellten Ausführungsbeispiels näher erläutert. Es zeigen:
- Fig. 1: in stark vereinfachter Darstellung im Querschnitt ein erfindungsgemäßes Unterseeboot mit einer ReformerBrennstoffzellenanlage und einem Bordstromnetz und
- Fig. 2: ein Schaltbild der erfindungsgemäßen ReformerBrennstoffzellenanlage und des Bordstromnetzes des Unterseebootes gemäß Fig. 1.

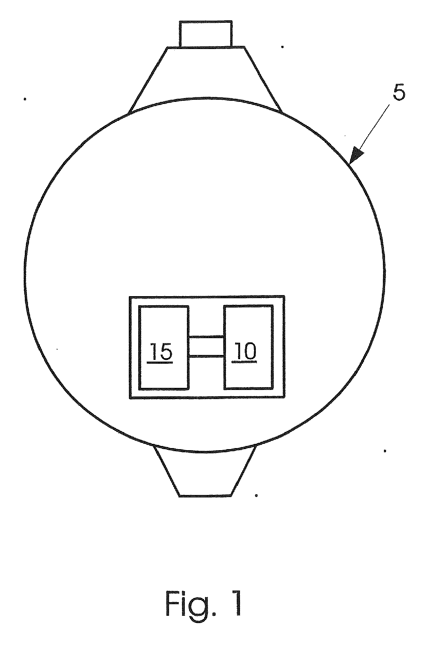

Das in Fig. 1 dargestellte Unterseeboot 5 weist ein Bordstromnetz 10 und eine Reformer-Brennstoffzellenanlage 15 auf, die zur Versorgung des Bordstromnetzes 10 mit diesem elektrisch verbunden ist.

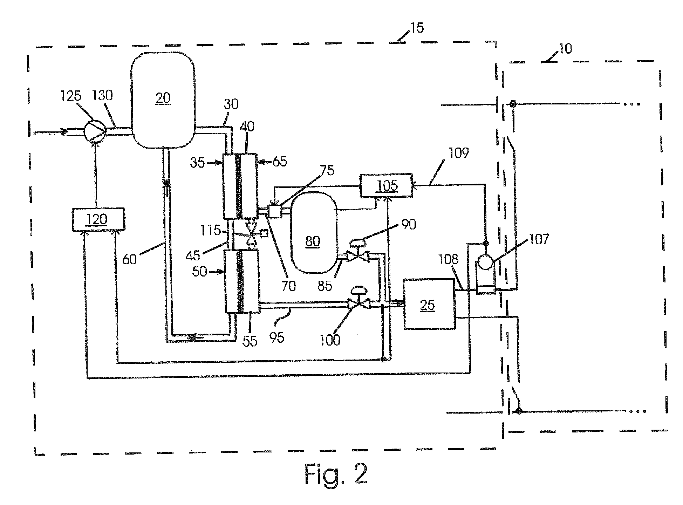

Wie in Fig. 2 dargestellt weist die Reformer-Brennstoffzellenanlage 15 einen Reformer 20 auf, der zur Reformierung von Methanol und Wasser zu einem wasserstoffhaltigen Reformat ausgebildet ist. Der im wasserstoffhaltigen Reformat des Reformers enthaltene Wasserstoff dient zur Versorgung einer Brennstoffzelle 25 der Reformer-Brennstoffzellenanlage 15, die den Wasserstoff verbrennen und dabei gewonnene elektrische Energie in das Bordstromnetz 10 abgeben kann.

Das wasserstoffhaltige Reformat wird vom Reformer 20 über eine Gasleitung 30 zur Reformatseite 35 eines ersten Membranfilters 40 geleitet. Die Reformatseite 35 des ersten Membranfilters 40 ist über eine weitere Reformatleitung 45 mit der Reformatseite 50 eines zweiten Membranfilters 55 verbunden. Der zweite Membranfilter 55 ist darüber hinaus mit einer Gasleitung 60 verbunden, die zur Rückführung von an Brennstoff abgereichertem Restreformat zum Reformer 20 dient.

Der erste Membranfilter 40 und der zweite Membranfilter 55 sind zur Abtrennung des Wasserstoffs aus dem wasserstoffhaltigen Reformat des Reformers 20 ausgebildet. Die Wasserstoffseite 65 des ersten Membranfilters 40 ist über eine Wasserstoffleitung 70 mit einer Durchflussstelleinrichtung 75 an einen Druckspeicher 80 zur Speicherung des vom ersten Membranfilter 40 abgetrennten Wasserstoffs leitungsverbunden. Die Durchflussstelleinrichtung 75 ist im gezeigten Ausführungsbeispiel ein Magnetventil. Alternativ können auch ein Rückschlagventil oder andere steuerbare Ventile, etwa ein Stellventil oder ein Massenstromregler, die Durchflussstelleinrichtung 75 bilden. Der Druckspeicher 80 ist seinerseits über eine Wasserstoffleitung 85 mit einem Druckhalteventil 90 an die Brennstoffzelle 25 leitungsverbunden. Der zweite Membranfilter 55 ist über eine Wasserstoffleitung 95 mit einem Druckhalteventil 100 an die Brennstoffzelle 25 leitungsverbunden. Die Wasserstoffleitungen 85, 95 sind stromabwärts der Druckhalteventile 90, 100 und vor ihrer Verbindung zur Brennstoffzelle 25 zusammengeführt.

Die Druckhalteventile 90, 100 halten den Wasserstoffdruck der Wasserstoffleitungen 85, 95 stromabwärts der Druckhalteventile 90, 100 und somit den Wasserstoffdruck an der Wasserstoffseite der Brennstoffzelle 25 auf einem zum Betrieb der Brennstoffzelle 25 erforderlichen Mindestdruck. Dabei ist der Haltedruck des Druckhalteventils 100 an der den zweiten Membranfilter 55 mit der Brennstoffzelle 25 verbindenden Wasserstoffleitung 85 auf einen geringfügig höheren Druck (im gezeigten Ausführungsbeispiel 2,3 bar) ausgelegt als der Haltedruck des Druckhalteventils 90 an der den Druckspeicher 80 mit der Brennstoffzelle 25 verbindenden Wasserstoffleitung 85 (im gezeigten Ausführungsbeispiel 2,1 bar). Diese Wahl der Haltedrücke der Druckhalteventile 90, 100 stellt sicher, dass zur ständigen Speisung der Brennstoffzelle 25 der durch die Wasserstoffleitung 85 zur Brennstoffzelle 25 geleitete Wasserstoff genutzt wird. Nur dann, wenn der Druck an der Brennstoffzelle 25 den Haltedruck des Druckhalteventils 90 an der den Druckspeicher 80 mit der Brennstoffzelle 25 verbindenden Wasserstoffleitung 85 unterschreitet, wird dabei Wasserstoff vom Druckspeicher 80 zur Brennstoffzelle 25 geführt.

Die Durchflussstelleinrichtung 75 wird von einer Regelungseinheit 105 angesteuert. Die Regelungseinheit 105 erfasst als Eingangsgröße die elektrische Leistung der Brennstoffzelle 25. Dazu ist ein Strommesser 107 an einer die Brennstoffzelle 25 mit dem Bordstromnetz 10 verbindenden elektrischen Leitung 108 angeordnet, die das Bordstromnetz 10 mit elektrischer Energie der Brennstoffzelle 25 speist. Der Strommesser 107 ist mit der Regelungseinheit 105 über eine Signalleitung 109 signalverbunden. Aus dem mittels des Strommessers 107 gemessenen Stromwerten wird in der Regelungseinheit 105 die elektrische Leistung, also die Belastung, der Brennstoffzelle 25 berechnet und die Durchflussstelleinrichtung 75 auf einen an die Belastung der Brennstoffzelle 25 angepassten Durchflusswert eingestellt. So wird der Druck im Druckspeicher 80 an den aktuellen Belastungszustand der Brennstoffzelle 25 angepasst. Weitere Eingangsgrößen der Durchflussstelleinrichtung 75 bilden der Druck im Druckspeicher 80 und der Druck an der Wasserstoffseite der Brennstoffzelle 25.

Die Wasserstoffseiten 65 des ersten Membranfilters 40 und des zweiten Membranfilters 55 sind ferner über eine Wasserstoffleitung 110 mit einem Ausgleichsventil 115 miteinander verbunden. Das Ausgleichsventil 115 ist im gezeigten Ausführungsbeispiel ein Magnetventil. Alternativ kann auch ein Durchflussstromregler das Ausgleichsventil 115 bilden.

In ihrem Beharrungszustand befindet sich die Brennstoffzelle 25 in Betriebszuständen mit geringen positiven und negativen Laständerungen, also Laständerungen zwischen einem ersten (negativen) und einem zweiten (positiven) Schwellwert. In einem solchen Beharrungszustand der Brennstoffzelle 25 kann der Reformer 20 den geringfügigen Laständerungen der Brennstoffzelle 25 mit der Anpassung der Reformatproduktion folgen. Zu diesem Zweck ist eine Steuereinrichtung 120 vorgesehen, die mit dem Strommesser 107 signalverbunden ist und somit einen Stromwert als Maß für die Belastung der Brennstoffzelle 25 als Eingangsgröße erhält. Die Steuereinrichtung 120 erhält als zusätzliche Eingangsgröße den Druckwert des an der Brennstoffzelle 25 anliegenden Wasserstoffs. Abhängig von den erhaltenen Eingangsgrößen stellt die Steuereinrichtung 120 ein Ventil 125, welches an einer Methanolleitung 130 angeordnet ist, die an dem Reformer 20 zur Zuführung von Methanol leitungsverbundenen ist. Die Methanolleitung 130 versorgt den Reformer 20 abhängig von der Stellung des Ventils 125 mit einem entsprechend angepassten Zufluss von Methanol.

Im Beharrungszustand der Brennstoffzelle 25, in welchem die Reformatproduktion des Reformers 20 die Belastungsänderungen der Brennstoffzelle 25 allein ausgleichen kann, ist das Ausgleichsventil 115 geöffnet. Bei geöffnetem Ausgleichsventil 115 sind erster 40 und zweiter Membranfilter 55 gewissermaßen miteinander zu einem einzigen, vergrößerten Membranfilter zusammengeschaltet. So werden zugleich beide Membranfilter 40, 55 zur Wasserstoffreinigung bzw. -abscheidung genutzt und weisen gemeinsam einen hohen Wirkungsgrad zur Wasserstoffreinigung auf.

Im Beharrungszustand der Brennstoffzelle 25 ist die Durchflussstelleinrichtung 75 geschlossen. Eine Zufuhr von mittels des ersten Membranfilters 40 abgetrenntem Wasserstoff über die Wasserstoffleitung 70 zum Druckspeicher 80 ist somit im Beharrungszustand unterbunden.

Beim Auftreten einer negativen Laständerung, die der Reformer 20 aufgrund seiner zeitlich trägen Dynamik nicht mit einer Verringerung der Reformatproduktion kompensieren kann, wird das Ausgleichsventil 115 geschlossen. Der erste Membranfilter 40 filtert den größten Teil des im wasserstoffhaltigen Reformat befindlichen Wasserstoffs aus, sodass der Wasserstoffdruck an der Wasserstoffseite 65 des ersten Membranfilters 40 deutlich ansteigt. Übersteigt der Wasserstoffdruck einen von der Durchflussregelung 105 an der Durchflussstelleinrichtung 75 eingestellten Wert, so öffnet die Durchflussstelleinrichtung 75 die Wasserstoffleitung 70 zum Druckspeicher 80. Der vom ersten Membranfilter 40 abgetrennte Wasserstoff durchströmt die Wasserstoffleitung 70 und füllt den Druckspeicher 80. Die Brennstoffzelle 25 nimmt zugleich den stromabwärts des Druckhalteventils 90 an der Brennstoffzelle 25 anliegenden Wasserstoff im verringerten Umfang ab. Daher hält der stromabwärts des Druckhalteventils 90 vorherrschende Wasserstoffdruck das Druckhalteventil 90 geschlossen. Eine Versorgung der Brennstoffzelle aus dem Druckspeicher 80 ist somit unterbunden.

Durch die den ersten Membranfilter 40 mit dem zweiten Membranfilter 55 reformatseitig verbindende Reformatleitung 45 strömt das mittels des ersten Membranfilters 40 an Wasserstoff abgereicherte Reformat zum zweiten Membranfilter 55. Der vom zweiten Reformatfilter 55 abgetrennte Wasserstoff gelangt über die Wasserstoffleitung 95 zur Brennstoffzelle 25. Da der Brennstoffzelle 25 nunmehr der mittels des zweiten Membranfilters 55 abgetrennte Wasserstoff zugeführt wird, ist die Versorgung der Brennstoffzelle 25 an ihre negative Lastschwankung angepasst.

Beim Auftreten einer positiven Laständerung, die durch den Reformer 20 aufgrund seiner zeitlich trägen Dynamik nicht mit einer Erhöhung der Reformatproduktion kompensiert werden kann, sinkt der an der Wasserstoffseite der Brennstoffzelle 25 anliegende Druck. Nach einiger Zeit sinkt dieser Druck unter den Haltedruck des Druckhalteventils 90 an der Wasserstoffleitung 85, die den Druckspeicher 80 mit der Brennstoffzelle 25 verbindet. In diesem Fall öffnet das Druckhalteventil 90 und im Druckspeicher 80 gespeicherter Wasserstoff gelangt über die Wasserstoffleitung 85 zur Brennstoffzelle 25. Zugleich wird das Ausgleichsventil 115 geöffnet und die Durchflussstelleinrichtung 75 geschlossen. Die Brennstoffzelle 25 wird nun sowohl mit im Druckspeicher 80 gespeichertem Wasserstoff, als auch mit mittels des ersten 40 und des zweiten Membranfilters 55 abgetrenntem Wasserstoff versorgt. Somit ist die Versorgung der Brennstoffzelle 25 an die positive Laständerung angepasst.

Beim Starten der Reformer-Brennstoffzellenanlage 15 wird die Brennstoffzelle 25 noch nicht von Beginn an belastet, sofern der Druckspeicher 80 noch nicht oder nicht ausreichend mit Wasserstoff gefüllt ist. Die Durchflussstelleinrichtung 75 ist geöffnet, während das Ausgleichsventil 115 zunächst geschlossen ist. Durch den ersten Membranfilter 40 diffundiert dann solange Wasserstoff und gelangt über die Wasserstoffleitung 70 in den Druckspeicher 80, bis der Druck im Druckspeicher 80 auf einen zum Betrieb der Reformer-Brennstoffzellenanlage 15 hinreichenden Druck angestiegen ist. Der Druckspeicher 80 ist somit zu einem geeigneten Befüllungsgrad gefüllt. Wenn der Reformer 20 genügend Wasserstoff zur statischen Versorgung der Brennstoffzelle 25 bereitstellt, wird die Brennstoffzelle 25 zugeschaltet und elektrisch belastet. Bei nahezu konstanter Last wird das Ausgleichsventil 115 geöffnet und der erste 40 und der zweite Membranfilter 55 trennen gemeinsam Wasserstoff zur Versorgung der Brennstoffzelle 25 aus dem Reformat ab.

### Bezugszeichen

- 5: - Unterseeboot
- 10: - Reformer-Brennstoffzellenanlage
- 15: - Bordstromnetz
- 20: - Reformer
- 25: - Brennstoffzelle
- 30: - Reformatleitung
- 35: - Reformatseite des ersten Membranfilters 40
- 40: - erster Membranfilter
- 45: - Reformatleitung
- 50: - Reformatseite des zweiten Membranfilters 55
- 55: - zweiter Membranfilter
- 60: - Reformatleitung
- 65: - Wasserstoffseite des ersten Membranfilters 40
- 70: - Wasserstoffleitung
- 75: - Durchflussstelleinrichtung
- 80: - Druckspeicher
- 85: - Wasserstoffleitung
- 90: - Druckhalteventil
- 95: - Wasserstoffleitung
- 100: - Druckhalteventil
- 105: - Regelungseinheit
- 107: - Strommesser
- 108: - Stromleitung
- 109: - Signalleitung
- 110: - Wasserstoffleitung
- 115: - Ausgleichsventil
- 120: - Steuereinrichtung
- 125: - Ventil
- 130: - Methanolleitung

## Patentansprüche

1. Verfahren zum Betreiben einer Reformer-Brennstoffzellenanlage (15) in einem Beharrungszustand, einem Zustand negativer Laständerung oder einem Zustand positiver Laständerung,
bei dem aus dem Reformat des Reformers (20) derart gasförmiger Brennstoff abgetrennt und der Brennstoffzelle (25) zugeführt wird, dass das Reformat, zumindest teilweise, sowohl einem ersten (40) und einem zweiten Gasabscheider (55) zugeführt wird,
wobei mittels des ersten Gasabscheiders (40) abgetrennter Brennstoff einem Speicher (80) zugeführt wird, bevor er der Brennstoffzelle (25) zugeführt wird und
wobei mittels des zweiten Gasabscheiders (55) abgetrennter Brennstoff zur ständigen Speisung der Brennstoffzelle (25) eingesetzt wird und
wobei eine Wasserstoffseite (55) des ersten Gasabscheiders (40) und eine Wasserstoffseite (65) des zweiten Gasabscheiders (50) mit einem Ausgleichsventil (115) miteinander verbunden sind,
**dadurch gekennzeichnet, dass**
der mittels des ersten Gasabscheiders (40) abgetrennte Brennstoff in dem Zustand negativer Laständerung bei geschlossenem Ausgleichsventil (115) dem Speicher (80) zugeführt wird und
in dem Beharrungszustand und dem Zustand positiver Laständerung diese Zufuhr von Brennstoff zum Speicher (80) bei geöffnetem Ausgleichsventil (115) unterbleibt oder verringert ist.

2. Verfahren nach Anspruch 1, **dadurch gekennzeichnet, dass** Wasserstoff als Brennstoff genutzt wird und/oder der Reformer (20) mit einem Treibstoff aus Kohlenwasserstoff und Wasser betrieben wird.

3. Verfahren nach Anspruch 1 oder 2, **dadurch gekennzeichnet, dass** als Gasabscheider (40, 55) Membranfilter eingesetzt werden und/oder als Speicher (80) ein Druckspeicher eingesetzt wird.

4. Verfahren nach Anspruch 1, 2 oder 3, **dadurch gekennzeichnet, dass** dem Speicher (80) zugeführter Brennstoff in einem zweiten Bedarfsfalle der Brennstoffzelle (25) zugeführt wird.

5. Verfahren nach einem der vorhergehenden Ansprüche, **dadurch gekennzeichnet, dass** sich der erste Bedarfsfall durch eine Belastung oder Belastungsänderung der Brennstoffzelle (25) kleiner/gleich einem ersten Schwellwert und/oder eine Füllung des Speichers (80) kleiner/gleich einem ersten Befüllungsgrad auszeichnet und/oder sich der zweite Bedarfsfall durch eine Belastung oder Belastungsänderung der Brennstoffzelle (25) größer/gleich einem zweiten Schwellwert, welcher insbesondere größer/gleich dem ersten Schwellwert ist, und/oder eine Füllung des Speichers (80) größer/gleich einem zweiten Befüllungsgrad auszeichnet.

6. Verfahren nach einem der vorhergehenden Ansprüche, **dadurch gekennzeichnet, dass** das Reformat des Reformers (20) dem ersten Gasabscheider (40) zugeführt und dessen reformatseitiger Rückstand dem zweiten Gasabscheider (55) zugeführt wird.

7. Verfahren nach einem der vorhergehenden Ansprüche, **dadurch gekennzeichnet, dass** dann, wenn kein erster und insbesondere kein zweiter, Bedarfsfall vorliegt, mittels des ersten Gasabscheiders (40) abgetrennter Brennstoff der Brennstoffzelle (25) mit mittels des zweiten Gasabscheiders (55) abgetrenntem Brennstoff vor der Zuführung zur Brennstoffzelle (25) zusammengeführt wird.

8. Verfahren nach einem der vorhergehenden Ansprüche, **dadurch gekennzeichnet, dass** die Zufuhr des Brennstoffs zum Speicher (80) und/oder die Zufuhr des dem Speicher (80) zugeführten Brennstoffs zur Brennstoffzelle (25) abhängig von Drücken in Bereichen der Reformer-Brennstoffzellenanlage (15) gesteuert/geregelt wird.

9. Verfahren nach einem der vorhergehenden Ansprüche, **dadurch gekennzeichnet, dass** eine Rückführung des dem Speicher (80) zugeführten Brennstoffs zum ersten Gasabscheider (40) verhindert oder begrenzt wird.

10. Verfahren nach einem der vorhergehenden Ansprüche, **dadurch gekennzeichnet, dass** es auf einem Unterboot (5) durchgeführt wird.

## Claims

1. Method for operating a reformer fuel cell assembly (15) in a steady state, a state of negative load change or a state of positive load change,
in which gaseous fuel is separated from the reformate of the reformer (20) and supplied to the fuel cell (25) in such a way that the reformate is at least partially supplied both to a first gas separator (40) and to a second gas separator (55),
wherein fuel separated by means of the first gas separator (40) is supplied to a reservoir (80) before it is supplied to the fuel cell (25) and
wherein fuel separated by means of the second gas separator (55) is used for the continuous feeding of the fuel cell (25) and
wherein a hydrogen side (55) of the first gas separator (40) and a hydrogen side (65) of the second gas separator (50) are connected to one another by an equalizing valve (115),
**characterized in that**
in the state of negative load change, the fuel separated by means of the first gas separator (40) is supplied to the reservoir (80) with the equalizing valve (115) closed and
in the steady state and the state of positive load change, this supply of fuel to the reservoir (80) does not occur or is reduced with the equalizing valve (115) open.

2. Method according to Claim 1, **characterized in that** hydrogen is used as the fuel and/or the reformer (20) is operated with a fuel comprising hydrocarbon and water.

3. Method according to Claim 1 or 2, **characterized in that** membrane filters are used as gas separators (40, 55) and/or a pressure reservoir is used as the reservoir (80).

4. Method according to Claim 1, 2 or 3, **characterized in that**, in a second state of need, fuel supplied to the reservoir (80) is supplied to the fuel cell (25).

5. Method according to one of the preceding claims, **characterized in that** the first case of need is distinguished by a loading or change in loading of the fuel cell (25) less than/equal to a first threshold value and/or a filling of the reservoir (80) less than/equal to a first degree of filling and/or the second case of need is distinguished by a loading or change in loading of the fuel cell (25) greater than/equal to a second threshold value, which is in particular greater than/equal to the first threshold value, and/or a filling of the reservoir (80) greater than/equal to a second degree of filling.

6. Method according to one of the preceding claims, **characterized in that** the reformate of the reformer (20) is supplied to the first gas separator (40) and its residue on the reformate side is supplied to the second gas separator (55).

7. Method according to one of the preceding claims, **characterized in that**, when there is no first case of need and in particular no second case of need, fuel of the fuel cell (25) that is separated by means of the first gas separator (40) is brought together with fuel separated by means of the second gas separator (55) before being supplied to the fuel cell (25).

8. Method according to one of the preceding claims, **characterized in that** the supply of the fuel to the reservoir (80) and/or the supply of the fuel supplied to the reservoir (80) to the fuel cell (25) is controlled/regulated in dependence on pressures in regions of the reformer fuel cell assembly (15).

9. Method according to one of the preceding claims, **characterized in that** a return of the fuel supplied to the reservoir (80) to the first gas separator (40) is prevented or limited.

10. Method according to one of the preceding claims, **characterized in that** it is carried out on a submarine (5).

## Revendications

1. Procédé de conduite d'une installation (15) de cellules à combustible à reformage dans une situation de régime stationnaire, une situation de modification négative de la charge ou une situation de modification positive de la charge,
dans lequel du combustible gazeux est séparé du produit de reformage du reformeur (20) et est apporté à la cellule à combustible (25), en amenant le produit de reformage au moins en partie à la fois à un premier séparateur de gaz (40) et à un deuxième séparateur de gaz (55),
le combustible séparé au moyen du premier séparateur de gaz (40) étant apporté à une réserve (80) avant d'être apporté à la cellule à combustible (25) et
le combustible séparé au moyen du deuxième séparateur de gaz (55) étant utilisé pour l'alimentation permanente de la cellule à combustible (25),
un côté hydrogène (55) du premier séparateur de gaz (40) et un côté hydrogène (65) du deuxième séparateur de gaz (50) étant raccordés l'un à l'autre par une soupape d'équilibrage (115),
**caractérisé en ce que**
le combustible séparé au moyen du premier séparateur de gaz (40) est apporté à la réserve (80) dans la situation de modification négative de la charge, la soupape d'équilibrage (115) étant fermée, et
**en ce que** dans la situation de régime permanent et la situation de modification positive de la charge, cet apport de combustible à la réserve (80) est interrompu ou réduit, la soupape d'équilibrage (115) étant ouverte.

2. Procédé selon la revendication 1, **caractérisé en ce que** le combustible utilisé est l'hydrogène et/ou **en ce que** le reformeur (20) est alimenté par un combustible constitué d'hydrocarbure et d'eau.

3. Procédé selon les revendications 1 ou 2, **caractérisé en ce qu'**il utilise comme séparateur de gaz (40, 55) un filtre à membrane et **en ce qu'**il utilise comme réserve (80) une réserve sous pression.

4. Procédé selon les revendications 1, 2 ou 3, **caractérisé en ce que** le combustible apporté à la réserve (80) est apporté à la cellule à combustible (25) dans un deuxième cas de nécessité.

5. Procédé selon l'une des revendications précédentes, **caractérisé en ce que** le premier cas de nécessité est **caractérisé par** une charge ou une modification de charge de la cellule à combustible (25) inférieures ou égales à une première valeur de seuil et/ou par un niveau de remplissage de la réserve (80) inférieur ou égal à un premier taux de remplissage, et/ou en ce que le deuxième cas de nécessité est **caractérisé par** une charge ou une modification de charge de la cellule à combustible (25) supérieures ou égales à une deuxième valeur de seuil qui est en particulier supérieure ou égale à la première valeur de seuil et/ou par un niveau de remplissage de la réserve (80) supérieur ou égal à un deuxième taux de remplissage.

6. Procédé selon l'une des revendications précédentes, **caractérisé en ce que** le produit de reformage du reformeur (20) est apporté au premier séparateur de gaz (40) et son résidu côté produit de reformage est apporté au deuxième séparateur de gaz (55).

7. Procédé selon l'une des revendications précédentes, **caractérisé en ce que** si un premier et un en particulier un deuxième cas de nécessité ne prévalent pas, le combustible séparé au moyen du premier séparateur de gaz (40) est apporté à la cellule à combustible (25) avec le combustible séparé au moyen du deuxième séparateur de gaz (55), avant qu'il soit amené à la cellule à combustible (25).

8. Procédé selon l'une des revendications précédentes, **caractérisé en ce que** l'apport de combustible à la réserve (80) et/ou l'apport du combustible apporté à la réserve (80) vers la cellule à combustible (25) est commandé et/ou régulé en fonction des pressions qui règnent au niveau de l'installation (15) de cellule à combustible et reformage.

9. Procédé selon l'une des revendications précédentes, **caractérisé en ce qu'**un renvoi du combustible apporté à la réserve (80) vers le premier séparateur de gaz (40) est empêché ou limité.

10. Procédé selon l'une des revendications précédentes, **caractérisé en ce qu'**il est mis en oeuvre dans un sous-marin (5).
